# EUROPÄISCHE PATENTSCHRIFT

(11) **EP 2 801 811 B1**
(45) Veröffentlichungstag und Bekanntmachung des Hinweises auf die Patenterteilung: **28.07.2021**
(21) Anmeldenummer: 13167030.9
(22) Anmeldetag: 08.05.2013
(51) Int. Cl.: G01N 9/28, G01F 23/14, G01F 23/16

(54) **Sensorvorrichtung zur Detektion einer Flüssigkeit sowie ein Verfahren dazu**
Sensor device for detecting a liquid and a method for this purpose
Dispositif de capteur pour la détection d'un liquide et procédé associé

(43) Veröffentlichungstag der Anmeldung: 12.11.2014
(73) Patentinhaber: RHYTON GmbH, 4900 Langenthal (CH)
(72) Erfinder: Ammann, Hans Ulrich, 4900 Langenthal (CH)
(74) Vertreter: AMMANN PATENTANWÄLTE AG

(56) Entgegenhaltungen:
- EP-A1- 1 356 724
- JP-A- 2006 064 633
- US-A- 5 568 882
- US-B1- 6 931 926

## Beschreibung

Die Erfindung bezieht sich auf eine Sensorvorrichtung zur Detektion einer Flüssigkeit sowie ein Verfahren dazu.

Derartige Sensorvorrichtungen und Verfahren werden z. B. eingesetzt, um Flüssigkeitsstände zu überwachen und/oder zu steuern.

Es sind z. B. Sensorvorrichtungen bekannt, welche als schwenkbar gelagerte Schwimmer ausgebildet sind und einen beweglichen Massekörper aufweisen. Erreicht die Flüssigkeit beim Ansteigen das Niveau des Schwimmers, wird dieser verschwenkt, so dass der Massekörper sich verschiebt und einen Schalter betätigt. Derartige Schwimmer haben den Nachteil, dass sie mit der Flüssigkeit in Kontakt kommen und unter Umständen so verschmutzt werden, dass sie nicht mehr zuverlässig funktionieren.

Aus der EP 1 356 724 A1 ist eine Sensorvorrichtung bekannt, welche als Füllstandsmessgerät für Futtertröge dient und welche mit Druckluft arbeitet, so dass am Ausgang eines Sensorrohres Druckmittel austritt. Muss dieses durch das Futter hindurch, so führt dies zu einem Druckaufbau im Sensorrohr. Über eine Abzweigleitung kann dieser Druckanstieg von einem Druckwandler erfasst werden, der ein Ausgangssignal erzeugt.

Es sind weitere pneumatisch wirkende Sensorvorrichtungen bekannt, vgl. z. B. US 5,568,882, US 5,953,954 und JP 2006 064633 A.

Hier ist eine Zuleitung mit einem Auslass vorgesehen, über welche Druckluft als Zufuhrstoff zuführbar ist. Der Auslass der Zuleitung befindet sich in der Flüssigkeit, um deren Niveau zu erfassen. Je höher dieses über den Auslass reicht, desto höher ist der hydrostatische Druck am Auslass und somit der auf die Luft in der Zuleitung wirkende Gegendruck. Durch Erfassen des Druckes in der Zuleitung kann schliesslich auf das Niveau der Flüssigkeit geschlossen werden. Dieses Messprinzip hat den Nachteil, dass es relativ träge ist und ein bestimmtes, vorgegebenes Niveau der Flüssigkeit nicht genau erfasst werden kann. Nachteilig ist auch, dass bei einem Einbau eines Schalters, z. B. eines Membranschalters, in der Zuleitung, der bei einem bestimmten Druck und somit einem bestimmten Niveau schaltet, in der Regel ein Überdruckventil vorzusehen ist, um den Schalter vor einem Überdruck zu schützen. Dieser kann z. B. dann entstehen, wenn der Auslass der Zuleitung verstopft ist und somit der Zufuhrstoff in Form der Druckluft nicht abfliessen kann.

Es ist eine Aufgabe der Erfindung, eine Sensorvorrichtung und ein Verfahren anzugeben, mit welcher bzw. welchem ein bestimmtes Niveau einer Flüssigkeit genauer erfassbar ist.

Diese Aufgabe wird durch die Sensorvorrichtung gemäss dem Anspruch 1 sowie durch das Verfahren gemäss dem unabhängigen Verfahrensanspruch gelöst. Die weiteren Ansprüche geben bevorzugte Ausführungen der erfindungsgemässen Sensorvorrichtung und des erfindungsgemässen Verfahrens sowie ein Niveauschalter und eine Filtervorrichtung an.

Die Erfindung basiert auf der Erkenntnis, dass das Strömungsverhalten des Zufuhrstoffs davon abhängt, ob Flüssigkeit am Auslass der Zuleitung anliegt oder nicht. Entsprechend weisen die Druckschwankungen des Zufuhrstoffs in der Zuleitung eine unterschiedliche zeitliche Charakteristik auf. Beispielsweise können die Druckschwankungen zwischen einem zeitlich variierenden Verlauf und einem Verlauf wechseln, der im Wesentlichen konstant bleibt. Durch Erfassen der Druckschwankungen kann auf die entsprechende Charakteristik geschlossen werden und somit der Zustand, bei welchem die Flüssigkeit nicht am Auslass anliegt, vom Zustand unterschieden werden, bei welchem die Flüssigkeit am Auslass anliegt. Im Gegensatz zu den bekannten pneumatisch wirkenden Sensorvorrichtungen, bei welchen eine statische Grösse in Form des hydrostatischen Druckes ausgewertet wird, wird hier eine dynamische Grösse in Form der Druckschwankungen für die Messung verwendet. Diese kann präzise durchgeführt werden und ist messtechnisch relativ einfach umsetzbar.

Weitere spezifische Konstruktionsmerkmale und deren Vorteile sind aus folgender Beschreibung und Zeichnungen eines Ausführungsbeispiels ersichtlich, in welchen
Fig. 1 eine bekannte Anordnung zum Bestimmen des Flüssigkeitsniveaus über den hydrostatischen Druck,
Fig. 2 eine erfindungsgemässe Anordnung mit offenem Auslass,
Fig. 3 die Anordnung gemäss Fig. 2 mit einem durch die Flüssigkeit benetzten Auslass,
Fig. 4 eine schematische Ansicht eines Ausführungsbeispiels einer Sensorvorrichtung,
Fig. 5 beispielhaft den zeitlichen Verlauf der Messwerte, und
Fig. 6 das anhand dieser Messwerte erzeugte Ausgangssignal zeigen.

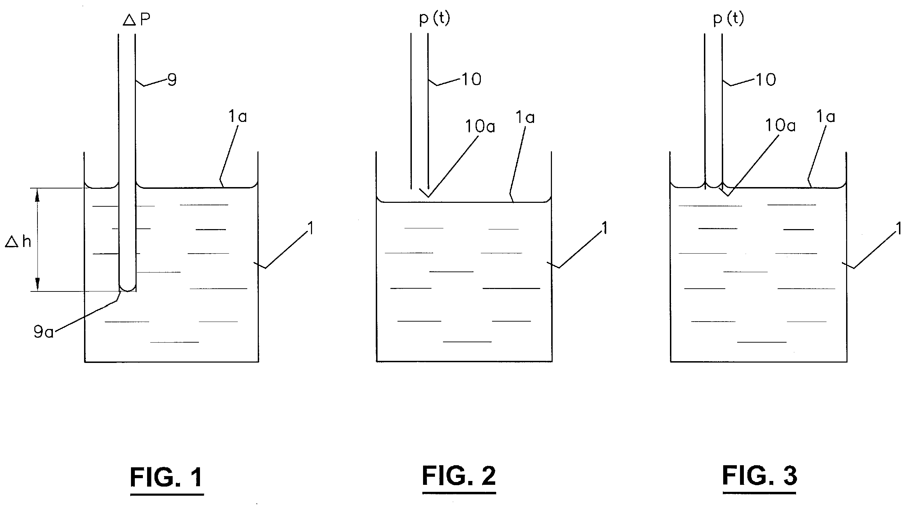

In Fig. 1 ist das bekannte Messprinzip illustriert, bei welchem über ein Rohr 9 Druckluft zum Auslass 9a geleitet wird. Befindet sich das Niveau 1a der Flüssigkeit 1 über dem Auslass 9a, so verursacht die darüber liegende Flüssigkeitssäule Δh eine Druckerhöhung von ΔP im Rohr 9. Durch Messung von ΔP lässt sich erkennen, ob sich der Auslass 9a in der Flüssigkeit 1 befindet oder nicht. Nachteilig daran ist, dass eine zuverlässige Messung erst ab einer bestimmten Eintauchtiefe Δh des Rohrs 9 möglich ist. Im Weiteren ist das Niveau 1a der Flüssigkeit 1 nicht genau erfassbar, was u. a. daher rührt, dass die Blasen, die sich beim Einleiten der Druckluft in die Flüssigkeit 1 bilden, zu einer Schwankung von ΔP führt, welches ein statische Grösse ist.

Das neue Messprinzip, wie es in den Figuren 2 und 3 illustriert und weiter unten genauer erläutert ist, basiert auf der Auswertung einer dynamischen, d.h. nicht-statischen Grösse. Zu diesem Zweck wird ein Zufuhrstoff über eine Zuleitung 10 zum Auslass 10a geleitet und die zeitlichen Schwankungen des Drucks p(t), welchen der Zufuhrstoff in der Zuleitung 10 aufweist, erfasst und ausgewertet.

Befindet sich das Niveau 1a der Flüssigkeit 1, wie in Fig. 2 dargestellt, unterhalb des Auslasses 10a, so ist dieser offen (hiernach auch als "offener Zustand" bezeichnet). Die Druckschwankungen p(t) weisen dann in der Zeit einen ersten charakteristischen Verlauf auf. Sobald die Flüssigkeit 1 den Auslass 10a benetzt wie in Fig. 3 dargestellt, so ist dieser geschlossen ("geschlossener Zustand"). Es ändern sich dann die Strömungsverhältnisse des Zufuhrstoffs, so dass die Druckschwankungen p(t) einen zweiten charakteristischen Verlauf aufweisen, der sich vom ersten unterscheidet.

Der jeweilige Verlauf hängt u. a. von der Art des verwendeten Zufuhrstoffes ab sowie von der Ausgestaltung der Zuleitung 10 und des Auslasses 10a.

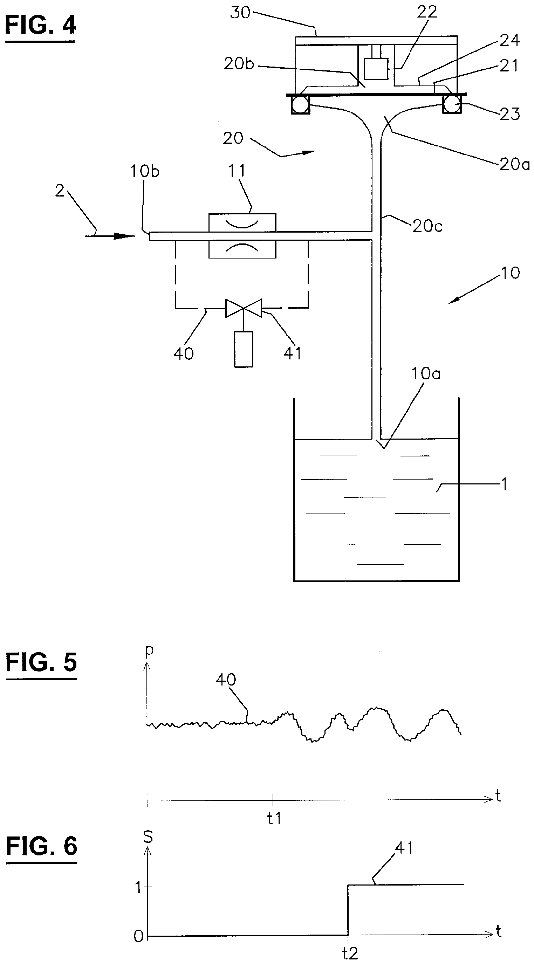

Wird durch die Zuleitung 10 z. B. Druckluft geleitet, so strömt diese beim offenen Zustand gemäss Fig. 2 gleichmässig aus dem Auslass 10a. Der Druck p(t) ändert sich daher nicht merklich. Beim geschlossenen Zustand gemäss Fig. 3 hingegen, wird die Druckluft in Form von Blasen in die Flüssigkeit 1 geleitet. Der Druck p(t) wird daher wiederkehrend zu- und abnehmen. Die beiden unterschiedlichen Verläufe sind in Fig. 5 illustriert, wobei der Zeitpunkt t1 dem Übergang vom offenen zum geschlossenen Zustand entspricht.

Es ist auch denkbar, eine umgekehrte Charakteristik von p(t) zu erzeugen, d. h. zeitlich schwankend im offenen Zustand und im Wesentlichen konstant im geschlossenen Zustand. Dies ist z. B. erzielbar, indem ein flüssiger Zufuhrstoff verwendet wird und der Auslass 10a als Belüfter zum Ansaugen von Luft ausgebildet ist. Im offenen Zustand wird dann durch den Auslass 10a laufend Luft angesaugt und dem flüssigen Zufuhrstoff beigemischt, so dass der Druck p(t) erkennbar in der Zeit schwankt. Befindet sich jedoch der Auslass 10a soweit in der Flüssigkeit 1, dass keine Luft mehr angesaugt wird, so strömt der flüssige Zufuhrstoff gleichmässig aus. Der Druck p(t) ändert sich dann zeitlich kaum.

Es ist auch möglich, den Auslass 10a so zu gestalten, dass ein flüssiger Zufuhrstoff in Form von zwei sich kreuzenden Strahlen austritt. Im offenen Zustand brechen diese an der Kreuzungsstelle in Tropfen auf, so dass sich zeitlich zu- und abnehmende Druckschwankungen p(t) ergeben. Im geschlossenen Zustand hingegen interagieren die in der Flüssigkeit austretenden Strahlen nicht miteinander, so dass der Druck p(t) im Wesentlichen gleich bleibt.

Allgemein kann durch Analyse der gemessenen Druckschwankungen p(t) z. B. hinsichtlich Frequenz und/oder Amplitude unterschieden werden, ob der offene oder geschlossene Zustand vorliegt.

Je nach Anwendungszweck braucht der Zufuhrstoff nicht permanent aus dem Auslass 10a zu strömen. So ist es denkbar, den Zufuhrstoff nur während bestimmten Zeitintervallen ausströmen zu lassen und den Druckverlauf auszuwerten, während in den Zeitintervallen dazwischen die Zufuhr des Zufuhrstoffs unterbrochen und keine Messung durchgeführt wird. Durch dieses wiederkehrende An- und Abschalten der Zufuhr ist weniger Zufuhrstoff für die Messung nötig.

Nachfolgend wird anhand der Fig. 4 ein Ausführungsbeispiel einer Sensorvorrichtung erläutert, mittels welcher detektierbar ist, ob am Auslass 10a der Zuleitung 10 eine Flüssigkeit 1 abwesend oder - so wie hier gezeichnet - anwesend ist. Wie durch den Pfeil 2 angedeutet, ist im Einlass 10b der Zuleitung 10 der Zufuhrstoff einspeisbar, welcher je nach Anwendungszweck der Sensorvorrichtung und Art der Flüssigkeit 1 gasförmig, beispielsweise in Form von Druckluft oder einem anderen Gas wie Stickstoff, oder flüssig sein kann.

Für die Messung beim Beispiel gemäss Fig. 4 werden die Art des Zufuhrstoffs und dessen Druck am Auslass 10a so gewählt, dass dann, wenn er aus diesem in die Flüssigkeit 1 geleitet wird, nicht kontinuierlich einströmt, sondern unterbrochen in die Flüssigkeit 1 gelangt, indem sich am Zuleitungsauslass 10a zeitlich wiederkehrend geschlossene Gebilde aus Zufuhrstoff formen, die an die Flüssigkeit 1 abgegeben werden. Je nach Art des Zufuhrstoffs sind diese Gebilde Tropfen, Blasen oder drgl.

Es sind Zufuhrmittel vorgesehen, mittels welcher der Zufuhrstoff mit im Wesentlichen konstantem Durchfluss (z. B. angegeben in Volumen pro Zeiteinheit) durch die Zuleitung 10 geleitet wird. Die Zufuhrmittel enthalten z. B. einen Durchflussregler. Beim Beispiel gemäss Fig. 4, welches für Verwendung von Druckluft oder einem anderen Gas als Zufuhrstoff ausgelegt ist, ist eine Drossel 11 vorgesehen, um den Durchfluss zu reduzieren.

Befindet sich nun der Zuleitungsauslass 10a ausserhalb der Flüssigkeit 1, so strömt der Zufuhrstoff kontinuierlich aus dem Zuleitungsauslass 10a. Der Druck p des Zufuhrstoffs in der Zuleitung 10 verändert sich dabei nicht wesentlich ("offener Zustand").

Ist hingegen Flüssigkeit 1 am Zuleitungsauslass 10a vorhanden, so wird der Zufuhrstoff portionsweise und somit unterbrochen eingeleitet. Dies bewirkt, dass sich der Druck p des Zufuhrstoffs in der Zuleitung 10 zeitlich ändert ("geschlossener Zustand").

Im geschlossenen Zustand wird in der Regel der Zufuhrstoff zeitlich nicht regelmässig an die Flüssigkeit 1 abgegeben, sondern die Zeitintervalle zwischen den einzelnen Abgabeereignissen variieren. Diese Zeitintervalle liegen jedoch punkto Amplitude und Frequenz in einem typischen Bereich, so dass beispielsweise durch Mittelung über mehrere Zeitpunkte der geschlossene Zustand vom offenen Zustand unterscheidbar ist.

Zum Erfassen der Druckschwankungen in der Zuleitung 10 weist die Sensorvorrichtung geeignete Erfassungsmittel auf. Beim Beispiel gemäss Fig. 4 umfasst die Sensorvorrichtung eine Messkammer 20, welche durch ein Trennelement 21 in eine vorderseitige Kammer 20a und eine rückseitige Kammer 20b unterteilt ist. Die vorderseitige Kammer 20a, welche hier trichterförmig ausgebildet ist, ist über einen Einlass 20c mit der Zuleitung 10 verbunden, um eine Schwingungsübertragung zu gewährleisten. In der rückseitigen Kammer 20b ist ein Sensor 22 angeordnet. Das Trennelement 21 ist so ausgelegt, dass Druckschwankungen in der Zuleitung 10 zu Schwingungen des Trennelements 21 führen, welche vom Sensor 22 erfassbar sind. Das Trennelement 21 dient somit als Schwingelement und ist dazu elastisch ausgebildet, z. B. in Form einer Membrane. Als Sensor 22 eignet sich z. B. ein Mikrofon, mittels welchem die vom schwingenden Trennelement 21 erzeugten Schallwellen erfassbar sind. Es ist auch denkbar, ein piezoelektrisches oder piezoresistives Element als Sensor 22 einzusetzen, um die Schwingungen des Trennelements 21 zu erfassen.

Die Sensorvorrichtung weist hier Dichtmittel 23 auf, z. B. einen O-Ring, zum Abdichten des Trennelements 21. Dadurch wird verhindert, dass Flüssigkeit 1 und/oder Dämpfe, beispielsweise durch Rückdiffusion, aus der Zuleitung 10 in den rückwärtigen Raum 20b der Messkammer 20 gelangen kann, wo sich der Sensor 22 befindet.

Weiter weist die Sensorvorrichtung einen Anschlag 24 auf, welcher die maximal mögliche Auslenkung des Trennelements 21 festlegt. Dadurch ist der Sensor 22 vor einem Überdruck schützbar, der sich beispielsweise aufbauen kann, wenn der Zuleitungsauslass 10a verstopft ist und daher der eingespeiste Zufuhrstoff nicht abfliessen kann. Die Sensorvorrichtung kann somit ohne Überdruckventile betrieben werden, die üblicherweise eingesetzt werden, um den Sensor vor Überdruck zu schützen.

Die Sensorvorrichtung enthält weiter Auswertemittel zum Auswerten der erfassten Druckschwankungen und Erzeugen von Signalen, welche anzeigen, ob die Flüssigkeit 1 am Zuleitungsauslass 10a abwesend oder anwesend ist. Die Auswertemittel umfassen typischerweise eine elektronische Schaltung 30, welcher die vom Sensor 22 erzeugten Signale zuführbar sind, um diese auszuwerten und Ausgangssignale zu erzeugen. Die Schaltung 30 ist auf analoger oder digitaler Basis aufbaubar und z. B. auf einer Leiterplatte angeordnet.

Die Schaltung 30 ist vorzugsweise so ausgelegt, dass die vom Sensor 22 gelieferten Messwerte über die Zeit gemittelt werden.

Weiter umfasst die Schaltung 30 Mittel zur Konditionierung der Messsignale. Beispielsweise weist die Schaltung 30 Filtermittel auf, um Störsignale herauszufiltern, die durch Lärm, äussere Schwingungen, etc. verursacht werden können. Die zu erfassenden Druckschwankungen liegen typischerweise im Bereich von einigen zehn Hertz, typischerweise 25-30 Hertz, während die Störsignale in der Regel höhere Frequenzen aufweisen. Durch Vorsehen eines Tiefpassfilters sind die Einflüsse solcher Störquellen herausfilterbar.

Die Auswertemittel der Sensorvorrichtung können so eingerichtet sein, dass sie ein Binärsignal als Ausgangssignal liefern und so die Sensorvorrichtung als Niveauschalter einsetzbar ist.

Es ist auch denkbar, die Schaltung 30 mit einem Prozessor zu versehen, um die vom Sensor 22 gelieferten Signale weiter auszuwerten und so Messwerte für bestimmte Eigenschaften der Flüssigkeit, z. B. deren Viskosität, Oberflächenspannung, etc. zu erhalten.

Optional, wie in der Fig. 4 gestrichelt angedeutet, weist die Zufuhrleitung 10 einen Bypass 40 auf, um Zufuhrstoff mit dem höheren Druck - wie eingespeist - zum Zuleitungsauslass 10a zu fördern. Das Öffnung und Schliessen des Bypass 40 erfolgt mittels eines schaltbaren Ventils 41. Das Vorsehen des Bypass 40 erlaubt es, durch kurzzeitiges Öffnen und Schliessen des Ventils 41 pulsartig Zufuhrstoff mit erhöhtem Druck durch die Zuleitung 10 und insbesondere den Zuleitungsauslass 10a zu leiten. Die Schaltung 30 kann so eingerichtet sein, dass dieses Durchspülen der Zuleitung 10 wiederkehrend erfolgt. Es ist auch möglich, die Schaltung 30 so einzurichten, dass der Druckanstieg, welcher durch den pulsartigen Fluss des Zufuhrstoffs verursacht wird, durch die Sensorvorrichtung erfassbar ist. Dadurch kann diese während des Betriebs auf etwaige Störungen hin getestet werden. Auch hier kann die Schaltung 30 so eingerichtet sein, dass diese Testmessung wiederkehrend durchgeführt wird.

Figuren 5 und 6 zeigen beispielhaft den zeitlichen Verlauf 40 des Druckes p, welcher durch die Sensorvorrichtung erfasst wird, und den zeitlichen Verlauf 41 des Ausgangssignals S. Beim Beispiel hier liegt bis zum Zeitpunkt t1 die Flüssigkeit 1 nicht am Zuleitungsauslass 10a an, so dass sich der Druck p nicht signifikant ändert (offener Zustand). Ab dem Zeitpunkt t1 befindet sich Flüssigkeit 1 am Zuleitungsauslass 10a, so dass der Druck p wiederkehrend zu- und abnimmt (geschlossener Zustand). Das Ausgangssignal S, welches hier ein Binärsignal ist, ist beim offenen Zustand auf "Null" und wechselt zum Zeitpunkt t2 auf "Eins" und gibt so den geschlossenen Zustand. Der Wechsel erfolgt dabei etwas zeitlich verzögert, d. h. t2 > t1.

Die Sensorvorrichtung ist vielseitig einsetzbar, beispielsweise als Niveauschalter, mit welchem erfassbar ist, ob eine Flüssigkeit ein bestimmtes Niveau erreicht hat. Dazu wird der Zuleitungsauslass 10a auf dem zu erfassenden Niveau angeordnet. Erreicht im Betrieb der Flüssigkeitsspiegel dieses Niveau, erzeugt die Sensorvorrichtung ein entsprechendes Ausgangsignal S.

Ein derartiger Niveauschalter ist beispielsweise bei einer Filtervorrichtung zum Reinigen von verschmutzter Flüssigkeit einsetzbar. Die Filtervorrichtung weist dazu eine Filtermulde mit einem Filter auf, in welche die zu reinigende Flüssigkeit geleitet wird. Mit der Zeit wird der Filter verstopft sein, so dass zu wenig Flüssigkeit durch den Filter gelangt und der Flüssigkeitsspiegel steigt, bis er das vorbestimmte Niveau erreicht und der Niveauschalter schaltet. Die Steuerung der Filtervorrichtung ist dabei so eingerichtet, dass dann der Vorschub des Filters betätigt wird, um einen unverbrauchten Abschnitt des Filters in die Filtermulde zu transportieren.

Es ist auch möglich, die Sensorvorrichtung mit zwei oder mehr Zuleitungsauslässen 10a zu versehen, die auf verschiedenen Niveaus angeordnet werden können, um so mehr als ein Niveau der Flüssigkeit 1 zu erfassen. Für jeden Zuleitungsauslass 10a sind dann Erfassungsmittel 20-23 in der Art von Fig. 4 vorgesehen.

Aus der vorangehenden Beschreibung sind dem Fachmann zahlreiche Abwandlungen zugänglich, ohne den Schutzbereich der Erfindung zu verlassen, der durch die Ansprüche definiert ist.

So kann anstelle eines Bypass 40 gemäss Fig. 4 auch ein vom Einlass 10b separater Einlass vorgesehen sein, welcher in der Zuleitung 10 mündet und in welchen Zufuhrstoff mit erhöhtem Druck einleitbar ist. Der Zufuhrstoff kann dabei auch aus einer anderen Quelle stammen. Wird z. B. Druckluft als Zufuhrstoff eingesetzt, so ist es denkbar, die Abluft aus dem pneumatischen System zu verwenden, um sie bei Bedarf durch den separaten Einlass in die Zuleitung 10 einzuleiten und so Zuleitung 10 und Auslass 10a durchzuspülen.

## Patentansprüche

1. Sensorvorrichtung zur Detektion der Abwesenheit oder Anwesenheit einer Flüssigkeit (1) am Auslass (10a) einer Zuleitung (10), welche zur Zufuhr eines Zufuhrstoffes dient, der beim Austritt aus dem Auslass einen Druck (p) in der Zuleitung (10) aufweist, der bei Abwesenheit der Flüssigkeit (1) am Auslass (10a) einen zeitlichen Verlauf mit einer ersten Charakteristik und bei Anwesenheit der Flüssigkeit (1) am Auslass (10a) einen zeitlichen Verlauf mit einer zweiten Charakteristik aufweist, **dadurch gekennzeichnet, dass** die Sensorvorrichtung Erfassungsmittel (20-23) zum Erfassen der Druckschwankungen in der Zuleitung (10) und Auswertemittel (30) aufweist, die eingerichtet sind, die erfassten Druckschwankungen der ersten bzw. zweiten Charakteristik zuzuordnen und ein entsprechendes Signal (S) zu erzeugen, welches anzeigt, ob die Flüssigkeit (1) am Zuleitungsauslass (10a) abwesend oder anwesend ist, wobei die Auswertemittel (30) eine elektronische Schaltung mit einem Tiefpassfilter umfassen, mittels welchem Störsignale herausfilterbar sind, die höhere Frequenzen als die der zu erfassenden Druckschwankungen aufweisen.

2. Sensorvorrichtung nach Anspruch 1, wobei die Auswertemittel (30) eingerichtet sind, Amplitude und/oder Frequenz der erfassten Druckschwankungen zu bestimmen.

3. Sensorvorrichtung nach einem der vorangehenden Ansprüche, mit einem Schwingelement (21), welches durch Druckschwankungen in der Zuleitung (10) in Schwingungen versetzbar ist, und einem Sensor (22) zum Erfassen der Schwingungen des Schwingelements (21).

4. Sensorvorrichtung nach einem der vorangehenden Ansprüche, mit einem Anschlag (24), welcher die maximale Auslenkung des Schwingelements (21) definiert.

5. Sensorvorrichtung nach einem der vorangehenden Ansprüche, wobei die Erfassungsmittel (20-23) mindestens eines der folgenden Elemente als Sensor (22) umfassen: ein Mikrofon, ein piezoelektrisches Element, ein piezoresistives Element.

6. Sensorvorrichtung nach einem der vorangehenden Ansprüche, mit einer Messkammer (20), welche in einen mit der Zuleitung (10) verbundenen ersten Raum (20a) und einen zweiten Raum (20b) unterteilt ist, in welchem ein bzw. der Sensor (22) angeordnet ist.

7. Sensorvorrichtung nach Anspruch 6, wobei ein bzw. das Schwingelement (21) zur Trennung der beiden Räume (20a, 20b) dient und/oder der zweite Raum (20b) gegenüber dem ersten Raum (20a) abgedichtet ist.

8. Niveauschalter zum Erfassen eines bestimmten Niveaus einer Flüssigkeit (1), mit einer Sensorvorrichtung nach einem der vorangehenden Ansprüche.

9. Filtervorrichtung zur Reinigung einer Flüssigkeit, mit einer Sensorvorrichtung nach einem der Ansprüche 1 bis 7 und/oder mit einem Niveauschalter nach Anspruch 8.

10. Verfahren zur Detektion der Abwesenheit oder Anwesenheit einer Flüssigkeit (1) am Auslass (10a) einer Zuleitung (10), wobei ein Zufuhrstoff derart zum Auslass (10a) geleitet wird, dass bei Abwesenheit der Flüssigkeit (1) am Auslass (10a) der zeitliche Verlauf des Drucks (p), welchen der Zufuhrstoff in der Zuleitung (10) aufweist, eine erste Charakteristik aufweist, und bei Anwesenheit der Flüssigkeit am Auslass (10a) eine zweite Charakteristik, **dadurch gekennzeichnet, dass** die Druckschwankungen in der Zuleitung (10) erfasst und ausgewertet werden, indem diese der ersten bzw. zweiten Charakteristik zugeordnet werden und ein entsprechendes Signal (S) erzeugt wird, welches anzeigt, ob die Flüssigkeit (1) am Zuleitungsauslass (10a) abwesend oder anwesend ist, wobei die Auswertung eine Tiefpassfilterung umfasst, in welcher Störsignale herausgefiltert werden, die höhere Frequenzen als die der zu erfassenden Druckschwankungen aufweisen.

11. Verfahren nach Anspruch 10, wobei die Amplitude und/oder Frequenz der Druckschwankungen bestimmt wird bzw. werden.

12. Verfahren nach einem der Ansprüche 10 bis 11, wobei die eine der beiden Charakteristiken einem im Wesentlichen konstanten zeitlichen Verlauf und die andere Charakteristik einem wiederkehrend zu- und abnehmenden Verlauf entspricht.

13. Verfahren nach einem der Ansprüche 10 bis 12, wobei der Zufuhrstoff, ein Gas, z. B. Druckluft oder Stickstoff, oder eine Flüssigkeit ist.

14. Verfahren nach einem der Ansprüche 10 bis 13, wobei zur Spülung wiederkehrend Zufuhrstoff mit erhöhtem Druck durch den Auslass (10a) geleitet wird.

15. Verfahren nach einem der Ansprüche 10 bis 14, bei welchem eine Sensorvorrichtung nach einem der Ansprüche 1 bis 7 eingesetzt wird.

## Claims

1. Sensor device for detecting the absence or presence of a liquid (1) at an outlet (10a) of a feed line (10), which serves for feeding a feed substance, which, when exiting from the outlet, has a pressure (p) in the feed line (10), the pressure having a course over time with a first characteristic when liquid (1) is absent at the outlet (10a) and a course over time with a second characteristic when liquid (1) is present at the outlet (10a), **characterized in that** the sensor device comprises sensing means (20-23) for sensing the pressure fluctuations in the feed line (10) and evaluation means (30), which are designed to assign the sensed pressure fluctuations to the first or second characteristic and to generate a corresponding signal (S), which indicates whether the liquid (1) is absent or present at the feed line outlet (10a), wherein the evaluation means (30) comprise an electronic circuit with a low-pass filter, by means of which interference signals can be filtered out, which have frequencies higher than those of the pressure fluctuations to be sensed.

2. Sensor device according to claim 1, wherein the evaluation means (30) are designed to determine the amplitude and/or the frequency of the sensed pressure fluctuations.

3. Sensor device according to any one of the preceding claims, comprising a vibrating element (21), which can be set in vibration by pressure fluctuations in the feed line (10), and a sensor (22) for sensing the vibrations of the vibrating element (21).

4. Sensor device according to any one of the preceding claims, comprising a stop (24), which defines the maximum deflection of the vibrating element (21).

5. Sensor device according to any one of the preceding claims, wherein the sensing means (20-23) comprises at least one of the following elements as a sensor (22): a microphone, a piezoelectric element, a piezoresistive element.

6. Sensor device according to any one of the preceding claims, comprising a measurement chamber (20), which is subdivided into a first chamber (20a) connected to the feed line (10) and a second chamber (20b), in which a/the sensor (22) is arranged.

7. Sensor device according to claim 6, wherein a/the vibrating element (21) serves for separating the two chambers (20a, 20b) and/or the second chamber (20b) is sealed off from the first chamber (20a).

8. Level switch for sensing a specific level of a liquid (1), comprising a sensor device according to any one of the preceding claims.

9. Filter device for cleaning a liquid, comprising a sensor device according to any one of claims 1 to 7 and/or comprising a level switch according to claim 8.

10. Method for detecting the absence or presence of a liquid (1) at the outlet (10a) of a feed line (10), wherein a feed substance is fed to the outlet (10a) in such a way that the course over time of the pressure (p) of the feed substance in the feed line (10) has a first characteristic when liquid (1) is absent at the outlet (10a) and has a second characteristic when liquid is present at the outlet (10a), **characterized in that** the pressure fluctuations in the feed line (10) are sensed and evaluated by assigning the pressure fluctuations to the first or second characteristic and generating a corresponding signal (S), which indicates whether the liquid (1) is absent or present at the feed line outlet (10a), wherein the evaluation includes a low-pass filtering, in which interference signals are filtered out which have frequencies higher than those of the pressure fluctuations to be sensed.

11. Method according to claim 10, wherein the amplitude and/or the frequency of the pressure fluctuations is/are determined.

12. Method according to any one of claims 10 to 11, wherein one of the two characteristics corresponds to a substantially constant course over time and the other characteristic corresponds to a repeatedly rising and falling course.

13. Method according to any of one claims 10 to 12, wherein the feed substance is a gas, for example compressed air or nitrogen, or a liquid.

14. Method according to any of one claims 10 to 13, wherein, for flushing purposes, feed substance is repeatedly fed at increased pressure through the outlet (10a).

15. Method according to any one of claims 10 to 14, in which a sensor device according to any one of claims 1 to 7 is used.

## Revendications

1. Dispositif capteur pour la détection de l'absence ou présence d'un liquide (1) à la sortie (10a) d'une conduite d'alimentation (10) servant à l'alimentation d'une substance d'alimentation laquelle en sortant de la sortie présente une pression (p) dans la conduite d'alimentation (10) qui présente en l'absence du liquide (1) à la sortie (10a) une évolution temporelle ayant une première caractéristique et en présence du liquide (1) à la sortie (10a) une évolution temporelle ayant une seconde caractéristique, **caractérisé en ce que** le dispositif capteur comprend des moyens de détection (20-23) afin de détecter les fluctuations de pression dans la conduite d'alimentation (10) et des moyens d'évaluation (30) agencés de manière à attribuer les fluctuations de pression détectées à la première ou à la seconde caractéristique, respectivement, et à générer un signal (S) correspondant qui indique si le liquide (1) est absent ou présent à la sortie de la conduite d'alimentation (10a), les moyens d'évaluation (30) comprenant un circuit électronique avec un filtre passe-bas permettant d'éliminer des signaux de perturbation présentant des fréquences supérieures à celles des fluctuations de pression à détecter.

2. Dispositif capteur selon la revendication 1, où les moyens d'évaluation (30) sont agencés de manière à déterminer l'amplitude et/ou la fréquence des fluctuations de pression détectées.

3. Dispositif capteur selon l'une des revendications précédentes, comprenant un élément oscillant (21) pouvant être mis en oscillations par les fluctuations de pression dans la conduite d'alimentation (10) et un capteur (22) permettant de détecter les oscillations de l'élément oscillant (21).

4. Dispositif capteur selon l'une des revendications précédentes, comprenant un arrêt (24) qui définit l'excursion maximale de l'élément oscillant (21).

5. Dispositif capteur selon l'une des revendications précédentes, où les moyens de détection (20-23) comprennent en tant que capteur (22) au moins un parmi les éléments suivants: un microphone, un élément piézoélectrique, un élément piézorésistif.

6. Dispositif capteur selon l'une des revendications précédentes, comprenant une chambre de mesure (20) qui est divisée en un premier espace (20a) relié à la conduite d'alimentation (10) et un second espace (20b) dans lequel un ou le capteur (22) est agencé.

7. Dispositif capteur selon la revendication 6, où un ou l'élément oscillant (21) sert à la séparation des deux espaces (20a, 20b) et/ou le second espace (20b) est étanché par rapport au premier espace (20a).

8. Commutateur de niveau pour détecter un niveau donné d'un liquide (1), comprenant un dispositif capteur selon l'une des revendications précédentes.

9. Dispositif de filtrage pour la purification d'un liquide, comprenant un dispositif capteur selon l'une des revendications 1 à 7 et/ou un commutateur de niveau selon la revendication 8.

10. Procédé pour la détection de l'absence ou présence d'un liquide (1) à la sortie (10a) d'une conduite d'alimentation (10), où une substance d'alimentation est amenée à la sortie (10a) de telle manière qu'en l'absence du liquide (1) à la sortie (10a), l'évolution temporelle de la pression (p) que présente la substance d'alimentation dans la conduite d'alimentation (10) présente une première caractéristique et en présence du liquide à la sortie (10a) une seconde caractéristique, **caractérisé en ce que** les fluctuations de pression dans la conduite d'alimentation (10) sont détectées et évaluées en les attribuant à la première ou à la seconde caractéristique, respectivement, et en générant un signal (S) correspondant qui indique si le liquide (1) est absent ou présent à la sortie (10a) de la conduite d'alimentation, l' évaluation comprenant un filtrage passe-bas au cours duquel les signaux de perturbation présentant des fréquences supérieures à celles des fluctuations de pression à détecter sont éliminés.

11. Procédé selon la revendication 10, où l'amplitude et/ou la fréquence des fluctuations de pression est/sont déterminée(s).

12. Procédé selon l'une des revendications 10 à 11, où l'une des deux caractéristiques correspond à une évolution temporelle substantiellement constante et l'autre caractéristique correspond à une évolution récurrente croissante et décroissante.

13. Procédé selon l'une des revendications 10 à 12, où la substance d'alimentation est un gaz, p.ex. de l'air comprimé ou de l'azote, ou un liquide.

14. Procédé selon l'une des revendications 10 à 13, où à des fins de rinçage, la substance d'alimentation est conduite à plusieurs reprises à travers la sortie à une pression accrue.

15. Procédé selon l'une des revendications 10 à 14, dans lequel un dispositif capteur selon l'une des revendications 1 à 7 est mis en œuvre.
